# EUROPEAN PATENT SPECIFICATION

(11) **EP 1 917 490 B1**
(45) Date of publication and mention of the grant of the patent: **15.02.2012**
(21) Application number: 06795727.4
(22) Date of filing: 22.08.2006
(51) Int. Cl.: F25D 23/00, F04B 39/12, F16M 7/00

(54) **A COMPRESSOR**
KOMPRESSOR
COMPRESSEUR

(30) Priority: 22.08.2005 TR 200503342
(43) Date of publication of application: 07.05.2008
(73) Proprietor: Arçelik Anonim Sirketi, 34950 Istanbul (TR)
(72) Inventor: GUNAYDIN, Metin, 34950 Istanbul (TR); YAROGLU, Tolga, 34950 Istanbul (TR); KAYA, Atilla, 34950 Istanbul (TR)
(86) International application number: PCT/IB2006/052898
(87) International publication number: WO 2007/023451

(56) References cited:
- EP-A2- 0 360 448
- EP-A2- 1 043 554
- AU-B2- 743 743
- FR-A1- 2 519 745

## Description

The present invention relates to a compressor comprising a foot providing its fixing.

As is known, the compressors use the kinetic energy they draw from an electric motor for pumping the fluid they suck in after increasing its pressure. Compressors are utilized in a wide range of applications due to this characteristic of theirs. For example, in cooling devices, the fluid circulated in the refrigerant cycle is activated by a compressor.

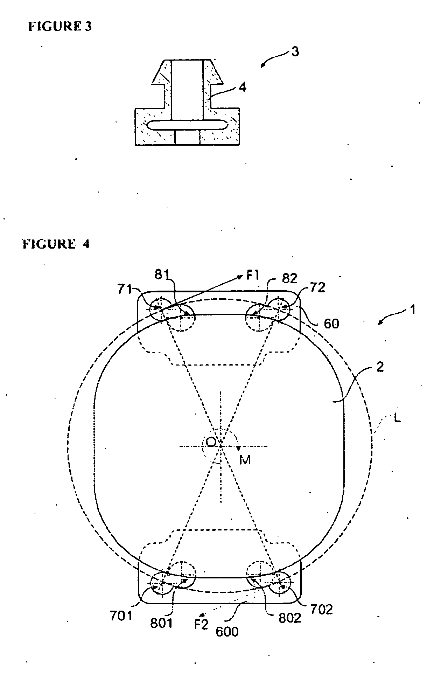

A compressor is assembled on the device it will be utilized in, e.g. a cooling device, by means of two feet situated on the bottom sides of its casing. The compressor is fixed by inserting the components such as screws, protrusions etc. into the holes situated on the feet. A gasket each is placed in these holes in order to attenuate the vibrations and to minimize the noise that occurs as the compressor operates. The gasket is basically formed of two wider parts separated by a narrow joint (Figure 3). The joint fits in the hole and the wider parts stay above and below the hole.

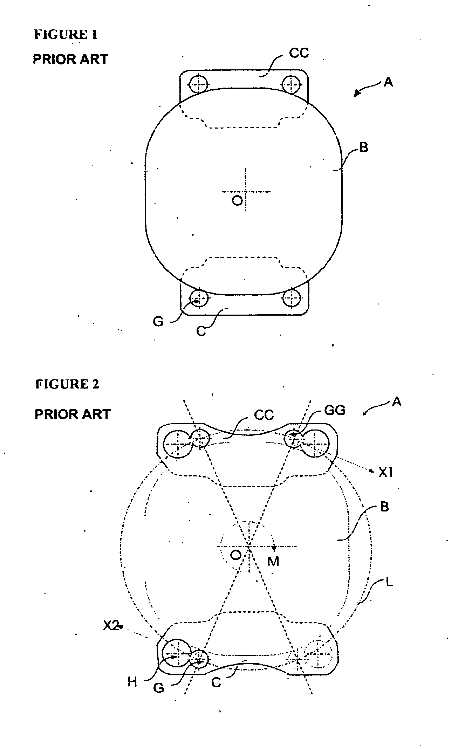

In the current state-of-the-art, two kinds of feet are utilized: The first type of foot (Figure 1) comprises two holes (G). In this kind of feet (C) the wider part of the gasket is inserted through the hole (G) by constrict and after it passes through the hole (G), it stretches out again and is seated on the surface of the foot (C). The joint of the gasket on the other hand, fits in the hole. The screws situated on two different feet (C and CC) inserted through the holes that are symmetrical with respect to the center (O) of the compressor (A) are sufficient for fixing the compressor (A). However, in this application, the constrict of the wider part of the gasket for passing it through the hole presents difficulties during the production and/or the assembly.

The second type of feet (Figure 2) comprise a second hole (H) besides each hole (G) present on the first type of feet, that has a diameter different from this hole (G), eccentric with respect to this hole (G) and at the same time intersecting with this hole (G). The compressor (A) is assembled on one group of cooling devices by means of the smaller diameter holes (G) and to another group of cooling devices by means of the bigger diameter holes (H).

Accordingly, the foot (C, CC) from a single mould can be utilized in different types and sizes of cooling devices. Furthermore, the gasket that has to be fitted into the smaller hole (G), is first passed through the bigger hole (H) and then slid into the smaller hole (G). Consequently, the fitting of the gasket becomes easier. However, when this type of feet (C, CC) are used, if the casing (B) is fixed by fixing elements inserted through the two holes (G and GG) situated on the two different feet (C and CC), that are symmetrical with respect to the center (O) of the compressor (A), particularly during the start on and stopping moments of the compressor (A), the compressor (A) rotates around its center (O) such that the gasket and the fixing element jumps from the small hole (G) to the big hole (H) as a result of the forces that reach high values (X1 and X2) and the loosely fitted gasket.

As can be seen, in the first type of feet used in state-of-the-art, even if there is no problem of rotational inertia during the start up and stopping moments, there are difficulties in fitting the gasket. On the other hand, in the second type of feet that facilitates the fitting of the gasket, there is the problem of rotation at the start up and stopping moments.

Due to these kinds of problems, the state-of-the-art compressors are fixed by using at least three of the four holes situated on the oppositely positioned feet. This necessitates the utilization of a lot of screws or fixing elements, therefore leading to the loss of material and time.

In the United States Patent no. US5524860, a compressor connection bracket that can be used with the condenser plates comprising mounting means of various sizes is described. This bracket has a quadrilateral shape having arcuate holes on the corners. The position of the ring member selectively movable in this hole is adjusted according to the mounting means of the condenser plate on which the compressor is to be assembled. However, in this application, since the part connecting the two ends of the arcuate hole is on the circles that are concentric with the center of the plate and passing through the center of the rings, the problem of compressor rotation is not solved. For example, when the ring member is at the center of the hole, the mounting means will turn in the hole, moving to the sides of he plate and hence will cause the compressor to rotate due to the forces affecting during the start on and stopping moments of the compressor. In order to prevent this, fixing has to be done through at least three holes in this application also. Furthermore, since the diameter of the hole into which the gasket is fitted is invariable, ease of assembly of the gaskets is not provided.

State of the art documents FR 2519745 which is considered the closest prior art and AU 743743 discloses a compressor that can be assembled onto a device.

The aim of the present invention as specified in claim 1 is the realization of a compressor that is assembled only by the two holes on the opposite feet, to which the gasket can be easily fitted and that is not displaced due to the rotational inertia.

The compressor realized in order to fulfill the objectives of the present invention is explicated in the attached claims.

The said compressor, in addition to the two fixing holes on one foot, comprises auxiliary holes adjacent to these holes and having wider diameters. The auxiliary hole is used for the easy insertion of the gasket to be fitted in the fixing hole. The fixing hole and the auxiliary hole are not concentric. However, these two holes partly overlap leaving a neck portion in between that allows the gasket to be inserted from one to the other. In the compressor subject to the present invention, the auxiliary hole is positioned such that the neck connecting it to the fixing hole stays outside the line of action of the force. In other words, the neck is not situated on the circle that passes through the centers of the two fixing holes situated on the two opposite feet which are concentric with the center of the compressor and symmetrical with respect to the center.

By this means, the fixing elements in the fixing holes which are situated on the two opposite feet and symmetrical with respect to the center, leans from the inside on the wall of the fixing hole situated on the line of action of the force and is not dislocated from the hole when tried to be dragged along in the rotational direction of the compressor with the effect of the force couple acting on them.

In the various embodiments of the present invention, it is possible to position the auxiliary holes inside or outside the circle, in between or outside of the two fixing holes.

By way of the present invention, the compressor can be assembled by only two holes situated on the different feet, symmetrical with respect to the center.

The compressor realized in order to fulfill the objectives of the present invention is illustrated in the attached figures, where:
Figure 1 - is the schematic top view of the first type of compressor utilized in the prior state-of-the-art.
Figure 2 - is the schematic top view of the second type of compressor utilized in the prior state-of-the-art.
Figure 3 - is the sectional view of the gasket.
Figure 4 - is the schematic top view of the compressor of the present invention.
Figure 5 - is the top view of the foot in an embodiment of the present invention.
Figure 6 - is the top view of the foot in another embodiment of the present invention.
Figure 7 - is the top view of the foot in yet another embodiment of the present invention.

Elements shown in figures are numbered as follows:
1. Compressor
2. Casing
3. Gasket
4. Joint
5. Neck
60., 600. Foot
71., 72., 701., 702. Fixing hole
81., 82., 801., 802. Auxiliary hole
The compressor (1) of the present invention comprises,
- a casing (2) which encloses the components that provide to increase the pressure of the aspirated fluid,
- two opposite feet (60, 600) that provide the casing (2) to be fixed on a surface,
- fixing holes (71, 72, 701, 702) situated on each foot (60, 600) that provide the casing (2) to be fixed to the surface on which it is assembled,
- a gasket (3) fitted in the fixing hole (71, 72, 701, 702) providing attenuation of the noise and vibrations, having two wider parts and narrower joint (4) in between these,
- a fixing element (not shown in figures) which is fitted in the fixing hole (71, 72, 701, 702) by being inserted through the gasket (3),
- an auxiliary hole (81, 82, 801, 802), eccentric with respect to the fixing hole (71, 72, 701, 702) and partly overlapping with the fixing hole (71, 72, 701, 702), through which the gasket (3) is inserted before being fitted in the fixing hole (71, 72, 701, 702) in order to make the fitting into the fixing hole (71, 72, 701, 702) easier, and
- a neck (5) that joins the fixing hole (71, 72, 701, 702) with the auxiliary hole (81, 82, 801, 802) allowing the gasket (3) to be slid into the fixing hole (71, 72, 701, 702) (Figure 4).

The neck (5) is not situated on the circle (L) whose diameter is the straight line passing through the centers of each one of the fixing holes (71, 702 or 72, 701) situated on the different feet (60 and 600) and almost symmetrically positioned with respect to the geometric center (O) of the compressor (1) and joins the centers of these holes (71, 702 or 72, 701). Consequently, it is also outside the line of action of the force couple (F1, F2) that is applied on the fixing element in the fixing hole (71, 72, 701, 702) and is tangential to the circle as a result of the torque (M) created during the start up and stopping of the compressor (1). Thus, only two fixing elements and two gaskets (3) each fitted into each of the fixing holes (71, 702 or 72, 701) situated on the different feet (60 and 600), positioned symmetrically with respect to the center (O) is sufficient for the assembly of the compressor (1).

The neck (5) has a width that allows on the one hand for the insertion of the gasket (3) from the auxiliary hole (81, 82, 801, 802) to the fixing hole (71, 72, 701, 702), on the other hand that is smaller than the diameter of both of these holes. The auxiliary hole (81, 82, 801, 802) has a wider diameter than the fixing hole (71, 72, 701, 702) in order to make the assembly of the gasket (3) easier (Figure 4).

By way of this feature of the neck (5), the compressor (1) can be fixed by the fixing elements inserted through each one of the fixing holes (71 and 702 or 72 and 701) situated on the two opposite feet (60, 600) that are symmetrical with respect to the its center (O).

In the present invention, during the assembly of the compressor (1), one of the two fixing hole couples that are symmetrical with respect to the center (O) (for example 71, 702) is chosen. The part of the gaskets (3) under the joint (4) is inserted through the auxiliary holes (81, 801) that are adjacent to the fixing holes (71, 702) by constrict slightly. In the second step, the gasket (3) is inserted through the necks (5) and slid into the adjacent fixing holes (71, 702). The assembly of the compressor (1) is completed by the insertion of the fixing element through the gasket (3). Even if the electric motor creates large torques (M) during the start on and stopping of the compressor (1), since the line of action of the force (F1 and F2) applied on the gasket (3) and the fixing element inside does not intersect the neck (5), the gasket (3) does not slide towards the auxiliary holes (81, 801) and the compressor (1) does not rotate.

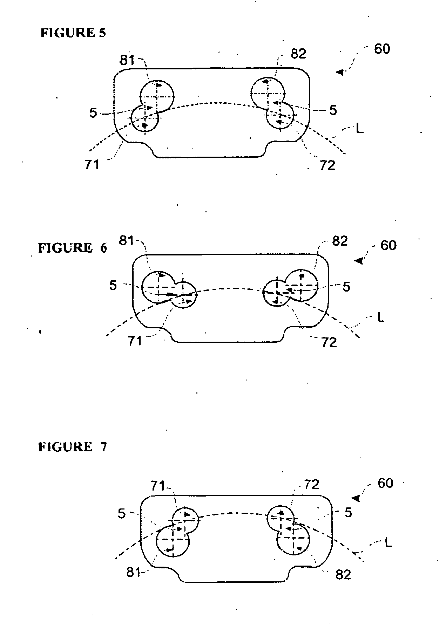

In the present invention, the neck (5) is outside of this circle (L) (Figure 5 and Figure 6). So the auxiliary holes (81, 82, 801, 802) can be accessed easily.

In an embodiment of the present invention, the neck (5) is positioned inside the circle (L) so that the feet (60, 600) do not take up much space under the casing (2) towards the outside for keeping its width as narrow as possible (Figure 4 and Figure 7).

In another embodiment of the present invention, the auxiliary holes (81 and 82 or 801 and 802) are between the two fixing holes (71 and 72 or 701 and 702) that are situated on the same foot (60 or 600) (Figure 4 and Figure 5). In this way the length of the foot (3) is kept as short as possible.

In another embodiment of the present invention, the auxiliary holes (81 and 82 or 801 and 802) are located outside (not located between) the two fixing holes (71 and 72 or 701 and 702) that are situated on the same foot (60 or 600) (Figure 6 and Figure 7). In this embodiment, since the auxiliary holes (81, 82, 801, 802) are not under the casing (2) the fitting of the gasket (3) is easier.

In the compressor (1) of the present invention, the auxiliary holes (81, 82, 801, 802) besides making easier the fitting of the gasket (3) into the fixing holes (71, 72, 701, 702), can also be utilized in fixing the compressor (1) on the cooling devices of different types and sizes.

By assembly of the compressor (1) of the present invention, on the one hand the fitting process of the gasket (3) into the fixing hole (71, 72, 701, 702) is made easier. On the other hand, the rotation problem of the compressor (1) where it is fixed has been eliminated even though the compressor (1) is fixed via only two holes (71, 702 or 72, 701). Fixing in only two holes (71, 702 or 72, 701) reduces the cost of the gaskets and the fixing elements.

## Claims

1. A compressor (1) that can be assembled on a device, said compressor being prevented from rotation at a place it is fixed when it is being utilized, comprising
- a casing (2) which encloses the components that provide to increase the pressure of an aspirated fluid,
- two opposite feet (60, 600) provided for the casing (2) to be fixed,
- fixing holes (71, 72, 701, 702) situated on each foot (60, 600) that enable the casing (2) to be fixed to a surface on which it is assembled,
- a gasket (3) fitted in the fixing hole (71, 72, 701, 702) providing attenuation of the noise and vibrations, having two wider parts and a narrower joint (4) in between these,
- an auxiliary hole (81, 82, 801, 802), eccentric with respect to the fixing hole (71, 72, 701, 702) and partly overlapping with the fixing hole (71, 72, 701, 702), through which the gasket (3) is inserted before being fitted in the fixing hole (71, 72, 701, 702) in order to make the fitting into the fixing hole (71, 72, 701, 702) easier, and
- a neck (5) that joins the fixing hole (71, 72, 701, 702) with the auxiliary hole (81, 82, 801, 802) allowing the gasket (3) to be slid into the fixing hole (71, 72, 701, 702)
and **characterized in that** the neck (5) is not situated on a circle (L) whose diameter is a continuous line passing through a center of two fixing holes (71, 702 or 72, 701) situated on different feet (60 and 600) that are symmetrically positioned with respect to a geometric center (O) of the said circle (L) and joining a center of the said fixing holes (71,702 or 72,701), the compressor (1) further comprising a fixing element suitable for assembling the compressor (1) by fitting the gasket (3) each to the two fixing holes (71, 72, 701, 702).

2. A compressor (1) according to Claim 1, **characterized in that** the neck (5) is situated inside of the circle (L).

3. A compressor (1) according to Claim 1, **characterized in that** the neck (5) is situated outside of the circle (L).

4. A compressor (1) according to any one of the above claims, **characterized by** the auxiliary holes (81 and 82 or 801 and 802) that are situated in the region between the two fixing holes (71 and 72 or 701 and 702) that are situated on the same foot (60 or 600).

5. A compressor (1) according to Claim 1, 2 or 3, **characterized by** the auxiliary holes (81 and 82 or 801 and 802) that are situated outside the two fixing holes (71 and 72 or 701 and 702) that are situated on the same foot (60 or 600).

## Patentansprüche

1. Kompressor (1), der an eine Vorrichtung montiert werden kann, wobei der genannte Kompressor bei seiner Benutzung daran gehindert wird, sich an seiner Fixierungsposition zu drehen, umfassend
- ein Gehäuse (2), das die Bauteile umschließt, die dafür sorgen, dass der Druck einer angesaugten Flüssigkeit erhöht wird,
- zwei voneinander gegenüberliegende Füße (60, 600), die dafür sorgen, dass das Gehäuse (2) fixiert ist,
- Fixierungsöffnungen (71, 72, 701, 702), die an den einzelnen Füßen (60, 600) angeordnet sind und es ermöglichen, dass das Gehäuse (2) an einer Fläche fixiert wird, an der es montiert ist,
- eine Dichtung (3), die in die Fixierungsöffnung (71, 72, 701, 702) eingesetzt ist und die Schall- und Schwingungsdämpfung versorgt und zwei breitere Teile und eine schmalere Verbindung (4) zwischen diesen aufweist,
- eine Hilfsöffnung (81, 82, 801, 802), die in Bezug auf die Fixierungsöffnung (71, 72, 701, 702) exzentrisch angeordnet ist und die Fixierungsöffnung (71, 72, 701, 702) teilweise überlagert, und durch die die Dichtung (3) eingeführt wird, bevor sie in die Fixierungsöffnung (71, 72, 701, 702) eingesetzt wird, um das Einsetzen in die Fixierungsöffnung (71, 72, 701, 702) zu erleichtern, und
- ein Halsstück (5), das die Fixierungsöffnung (71, 72, 701, 702) mit der Hilfsöffnung (81, 82, 801, 802) verbindet und die es erlaubt, dass die Dichtung (3) in die Fixierungsöffnung (71, 72, 701, 702) geschoben wird,
und **dadurch gekennzeichnet, dass** das Halsstück (5) nicht an einem Kreis (L) angeordnet ist, dessen Durchmesser eine fortlaufende Linie ist, die durch eine Mitte von zwei Fixierungsöffnungen (71, 702 oder 72, 701) verläuft, welche an unterschiedlichen Füßen (60 und 600) angeordnet sind und in Bezug auf eine geometrische Mitte (O) des Kreises (L) symmetrisch angeordnet sind, und die eine Mitte der Fixierungsöffnungen (71, 702 oder 72, 701) verbindet, wobei der Kompressor (1) ferner ein Fixierelement umfasst, das dazu geeignet ist, den Kompressor (1) zu montieren, indem die Dichtung (3) jeweils in die zwei Fixierungsöffnungen (71, 72, 701, 702) eingesetzt wird.

2. Kompressor (1) nach Anspruch 1, **dadurch gekennzeichnet, dass** das Halsstück (5) im Inneren des Kreises (L) angeordnet ist.

3. Kompressor (1) nach Anspruch 1, **dadurch gekennzeichnet, dass** das Halsstück (5) außerhalb des Kreises (L) angeordnet ist.

4. Kompressor (1) nach einem der vorangehenden Ansprüche, **dadurch gekennzeichnet, dass** die Hilfsöffnungen (81 und 82 oder 801 und 802) im Gebiet zwischen den zwei Fixierungsöffnungen (71 und 72 oder 701 und 702) angeordnet sind, die an demselben Fuß (60 oder 600) angeordnet sind.

5. Kompressor (1) nach Anspruch 1, 2 oder 3, **dadurch gekennzeichnet, dass** die Hilfsöffnungen (81 und 82 oder 801 und 802) außerhalb der zwei Fixierungsöffnungen (71 und 72 oder 701 und 702) angeordnet sind, die an demselben Fuß (60 oder 600) angeordnet sind.

## Revendications

1. Un compresseur (1) qui peut être assemblé sur un dispositif, ledit compresseur étant empêché de tourner à un point auquel il est attaché quand il est utilisé, comprenant
- un boîtier (2) qui renferme les pièces qui permettent l'augmentation de la pression d'un fluide aspiré,
- deux pieds opposés (60, 600) permettant au boîtier (2) d'être fixé,
- des trous de fixation (71, 72, 701, 702) situés sur chaque pied (60, 600) qui permettent au boîtier (2) d'être fixé à une surface sur laquelle il est assemblé,
- un joint d'étanchéité (3) emboîté dans le trou de fixation (71, 72, 701, 702) permettant l'atténuation du bruit et des vibrations, ayant deux parties plus large et un joint plus étroit (4) entre celles-ci,
- un trou auxiliaire (81, 82, 801, 802) qui est excentrique par rapport au trou de fixation (71, 72, 701, 702) et qui se chevauche avec le trou de fixation (71, 72, 701, 702) à travers lequel le joint d'étanchéité (3) est inséré avant d'être emboîté dans le trou de fixation (71, 72, 701, 702) afin de rendre l'emboîtage dans le trou de fixation (71, 72, 701, 702) plus facile, et
- un cou (5) qui relie le trou de fixation (71, 72, 701, 702) avec le trou auxiliaire (81, 82, 801, 802) et donc qui permet au joint d'étanchéité (3) d'être glissé dans le trou de fixation (71, 72, 701, 702)
et **caractérisé en ce que** le cou (5) n'est pas situé sur un cercle (L) dont le diamètre est une ligne continue passant par un centre de deux trous de fixation (71, 702 ou 72, 701) situés sur pieds différents (60 et 600) qui sont positionnés symétriquement par rapport une centre géométrique (O) dudit cercle (L) et reliant un centre desdits trous de fixation (71, 702 ou 72, 701), le compresseur (1) comprenant de plus une pièce de fixation adaptée pour assembler le compresseur (1) en emboîtant le joint d'étanchéité (3) dans chacun de deux trous de fixation (71, 72, 701, 702).

2. Un compresseur (1) selon la Revendication 1, **caractérisé en ce que** le cou (5) est situé à l'intérieur du cercle (L).

3. Un compresseur (1) selon la Revendication 1, **caractérisé en ce que** le cou (5) est situé en dehors du cercle (L).

4. Un compresseur (1) selon l'une quelconque des revendications précédentes, **caractérisée par** les trous auxiliaires (81 et 82 ou 801 et 802) qui sont situés dans la région entre les deux trous de fixation (71 et 72 ou 701 et 702) qui sont situés sur le même pied (60 ou 600).

5. Un compresseur (1) selon la Revendication 1, 2 ou 3, **caractérisée par** les trous auxiliaires (81 et 82 ou 801 et 802) qui sont situés en dehors des deux trous de fixation (71 et 72 ou 701 et 702) qui sont situés sur le même pied (60 ou 600).
